Europäisches Patentamt

European Patent Office

Office européen des brevets

(11) Veröffentlichungsnummer: **0 309 643 B1**

(12) **EUROPÄISCHE PATENTSCHRIFT**

(45) Veröffentlichungstag der Patentschrift: **25.11.92**

(51) Int. Cl.5: **G05D 7/06**, G01F 1/36

(21) Anmeldenummer: **88107148.4**

(22) Anmeldetag: **04.05.88**

(54) Stellglied zur Beeinflussung der Durchflussmenge eines gasförmigen oder flüssigen Mediums.

(30) Priorität: **28.09.87 CH 3740/87**

(43) Veröffentlichungstag der Anmeldung:
**05.04.89 Patentblatt 89/14**

(45) Bekanntmachung des Hinweises auf die
Patenterteilung:
**25.11.92 Patentblatt 92/48**

(84) Benannte Vertragsstaaten:
**CH DE FR GB IT LI SE**

(56) Entgegenhaltungen:
**EP-A- 0 170 552**
**WO-A-86/03855**
**DE-A- 3 244 668**
**FR-A- 2 532 391**
**US-A- 4 581 944**

**ELEKTRONIK, Band 31, Nr. 13, 2. Juli 1982,**
**Seiten 150-152, München, DE; H. HENCKE:**
**"Piezoresistive Druckaufnehmer zur Durch-**
**flussmessung"**

(73) Patentinhaber: **Landis & Gyr Betriebs AG**

**CH-6301 Zug(CH)**

(72) Erfinder: **Nauer, Paul**
**Grabenackerstrasse 45**
**CH-6312 Steinhausen(CH)**

(74) Vertreter: **Müller, Hans-Jürgen, Dipl.-Ing. et al**
**Müller, Schupfner & Gauger Maximilianstras-**
**se 6 Postfach 10 11 61**
**W-8000 München 1(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

# Beschreibung

Die Erfindung betrifft ein Stellglied nach dem Oberbegriff des Anspruchs 1 sowie Verwendungen desselben.

Bei technischen oder chemischen Prozessen, beispielsweise bei Dosiereinrichtungen oder Heizungsanlagen, ist es oftmals erforderlich, die Menge eines durch eine Leitung strömenden gasförmigen oder flüssigen Mediums zu regeln. Zur Beinflussung der pro Zeiteinheit durch eine Rohrleitung fließenden Menge des Mediums sind dann Stellglieder vorhanden, mit denen sich die Menge variieren läßt.

Gleichzeitig ist es oftmals erforderlich, die Menge des pro Zeiteinheit durch das Stellglied fließenden Mediums zu messen. Da die Durchflußmenge dem Öffnungsgrad proportional ist, kann der Öffnungsgrad als Maß für die Durchflußmenge verwendet werden. Dies ist jedoch nicht möglich bei höheren Ansprüchen an die Genauigkeit und auch dann, wenn der durch das Stellglied verursachte Druckabfall nicht konstant ist.

Bekannt ist aus der DE-OS 33 26 523 ein Stellglied, bei dem mittels eines Kompensationsbalgs die Durchflußmenge auch bei schwankendem Differenzdruck dadurch konstant gehalten wird, daß der Öffnungsgrad durch den Differenzdruck variiert wird. Das kann für Dosiereinrichtungen vorteilhaft sein, jedoch ist ein solches Stellglied nicht geeignet, eine wechselnde Durchflußmenge zu messen.

Darüber hinaus ist ein Durchflußregelventil bekannt (WO-A-86 03 855), bei dem durch einen Kompensator der Differenzdruck über dem Regelventil konstant gehalten wird, so daß allein der mittels eines Wegaufnehmers erfaßbare Öffnungsquerschnitt für die Bestimmung der Durchflußmenge ausgewertet wird. Dabei ist der Schließkörper als Teil eines Kolbens ausgebildet, der an seinem mit dem Schließkörper abgewandten Ende auf einen Stellungsmesser einwirkt. Bei Differenzdruckmessern ist es auch bekannt (EP-A-0 170 552), mittels eines zentralen Stabes die Position einer Scheibe einer Membrandose mittels einer Magnetspule abzufühlen. Die Anwendung piezoresistiver Druckaufnehmer zur durch Differenzdruckmessungen bewirkten Durchflußmengenmessung ist ebenfalls bekannt (Elektronik, 1982, Seiten 150 bis 152).

Soll die Durchflußmenge nicht auf einen konstanten Wert geregelt, aber die Durchflußmenge gemessen werden, so ist es erforderlich, das Signal des effektiven Öffnungsgrades zu korrigieren mit einem Signal für den Druckabfall über dem Stellglied. Bekannt ist aus der DE-OS 32 44 668, den Druck des Mediums vor und hinter einem Absperrorgan zu messen und durch Subtraktion den Differenzdruck zu erfassen. Genannt ist darin auch der Vorschlag, den Druck vor und hinter einer vor dem Absperrorgan in die Rohrleitung eingebauten Blende zu bestimmen und in den Differenzdruck umzurechnen. Gemäß diesem Vorschlag kann durch die Verknüpfung der Signale "Öffnungsgrad" und "Druckdifferenz" ein Signal gewonnen werden, das relativ genau der Durchflußmenge entspricht.

Ausgehend von dem aus der DE-OS 32 44 668 bekannten Stand der Technik liegt der Erfindung die Aufgabe zugrunde, ein Stellglied zu schaffen, das die Durchflußmenge des durchströmenden Mediums genau erfassen kann, ohne daß zusätzliche Geräte für die Messung des Mediendruckes vor und hinter dem Stellglied erforderlich sind.

Die Lösung dieser Aufgabe gelingt durch die im kennzeichnenden Teil des Anspruchs 1 genannten Maßnahmen. Vorteilhafte Ausbildungen des Erfindungsgegenstandes sind in den Unteransprüchen genannt.

Nachfolgend wird anhand der Zeichnung ein Ausführungsbeispiel der Erfindung beschrieben.

Es zeigen

Fig. 1     ein Stellglied in nicht maßstäblicher, leicht schematisierter Darstellung und

Fig. 2     eine Ansteuerschaltung für einen eine Spindel des Stellglieds bewegenden Stellantrieb.

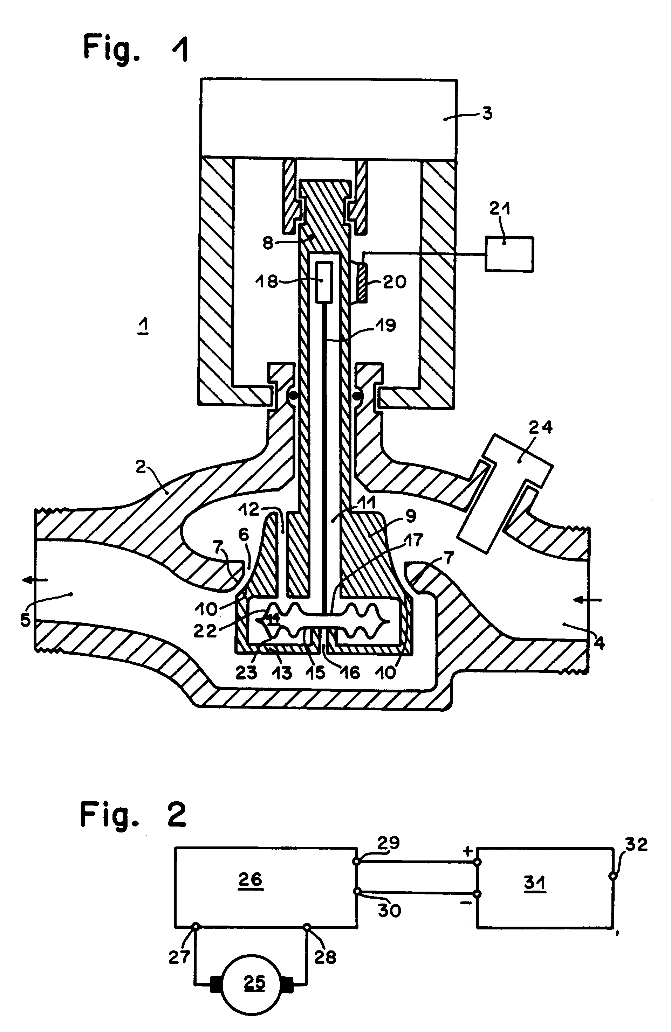

Ein Stellglied 1 (Fig. 1) besteht aus einem Ventilgehäuse 2 und einem an diesem befestigten Stellantrieb 3. Das Ventilgehäuse 2 umschließt eine Einlaßkammer 4 und eine Auslaßkammer 5 und weist an einer Durchtrittsöffnung 6 zwischen der Einlaßkammer 4 und der Auslaßkammer 5 einen Ventilsitz 7 auf. Die Durchtrittsöffnung 6 ist verschließbar durch einen an einer Spindel 8 befestigten Schließkörper 9, an dem eine Dichtfläche 10 vorhanden ist. Mit Hilfe des Stellantriebs 3 läßt sich die Spindel 8 mit dem daran befestigten Schließkörper 9 in Richtung der Längsachse der Spindel 8 verschieben, wobei in einer ersten Endlage die Dichtfläche 10 am Ventilsitz 7 anliegt, wodurch das Stellglied im Zustand "geschlossen" ist, und in einer zweiten Endlage zwischen der Dichtfläche 10 und dem Ventilsitz 7 ein maximaler Abstand besteht. Dieser zweiten Endlage entspricht der Zustand "voll geöffnet".

Der Schließkörper 9 weist einen sich in die Spindel 8 fortsetzenden Hohlraum 11 auf, der über eine Öffnung 12 mit der Einlaßkammer 4 in Verbindung steht und gegen die Auslaßkammer 5 durch einen Boden 13 abgeschlossen ist. In diesem Hohlraum 11 befindet sich ein Druckmeßelement 14, das eine Basisfläche 15 aufweist, mit der es am Boden 13 befestigt ist und dabei ein im Boden 13 angebrachtes Loch 16 druckdicht verschließt. Das Druckmeßelement 14 gibt ein dem Differenzdruck zwischen der Einlaßkammer 4 und der Auslaßkammer 5 proportionales elektrisches Signal ab. Mit Vorteil kann als Druckmeßelement 14 ein piezoresistiver Wandler verwendet werden. Dessen elektrische Anschlüsse werden auf geeignete Weise aus der Spindel herausgeführt.

Das Druckmeßelement 14 kann vorteilhaft als Kompressionselement ausgebildet sein und weist dann eine der Basisfläche 15 gegenüberliegende Bezugsfläche 17 auf, deren als Höhe H des Kompressionselements zu bezeichnender Abstand zur Basisfläche 15 eine Funktion des auf das Kompressionselement wirkenden Druckes ist. Weil die Basisfläche 15 über das Loch 16 mit der Auslaßkammer 5 und die Bezugsfläche 17 über die Öffnung 12 mit der Einlaßkammer 4 in Verbindung stehen, ist der auf das Kompressionselement wirkende Druck gleich der Druckdifferenz zwischen der Einlaßkammer 4 und der Auslaßkammer 5. Diese Anordnung hat aufgrund ihres einfachen Aufbaus den Vorteil, daß sie nicht störungsanfällig und somit wartungsfrei ist.

Der Hohlraum 11 erstreckt sich im Innern der Spindel 8 so weit gegen das antriebsseitige Ende der Spindel 8, daß ein Teil dieses Hohlraums 11 in jenem Bereich der Spindel 8 liegt, der sich dauernd außerhalb des Ventilgehäuses 2 befindet. In diesem im antriebsseitigen Ende der Spindel 8 befindlichen Teil des Hohlraums 11 befindet sich ein Magnet 18, der über eine Stange 19 mit der Bezugsfläche 17 des Kompressionselements verbunden ist. Damit äußert sich die Lage der Bezugsfläche 17 durch eine Änderung der Position des Magneten 18.

An der Mantelfläche der Spindel 8 ist ein Hallelement 20 befestigt, dessen Position so gewählt ist, daß sich Hallelement 20 und Magnet 18 gegenüber liegen. Eine Lageverschiebung des Magneten 18 in der Richtung der Achse der Spindel 8 bewirkt damit eine Änderung der vom Hallelement 20 abgegebenen Spannung. Damit ist am Hallelement eine Spannung abgreifbar, die der Höhe H, also der relativen, auf die Basisfläche 15 bezogenen Lage der Bezugsfläche 17 des Kompressionselements entspricht. Der Magnet 18 und das Hallelement 20 bilden zusammen eine Vorrichtung zur Messung der Gestaltänderung des Kompressionselements, der Höhe H. Da der Abstand zwischen Basisfläche 15 und Bezugsfläche 17 (Höhe H) eine Funktion der Druckdifferenz zwischen Einlaßkammer 4 und Auslaßkammer 5 ist, ist somit die am Hallelement 20 abgreifbare Spannung ebenfalls eine Funktion der genannten Druckdifferenz. Besonders vorteilhaft dabei ist, daß die Messung der Höhe H berührungslos und somit krafthysteresefrei erfolgt und daß es keiner störungsempfindlichen zusätzlichen Durchführung durch das Ventilgehäuse 2 und/oder die Spindel 8 bedarf.

Das Hallelement 20 ist mit einem Signalumformer 21 elektrisch verbunden, wobei der Signalumformer 21 das Signal des Hallelements 20 in ein normiertes, der Druckdifferenz proportionales Signal umwandelt.

Das Kompressionselement ist dann besonders kostengünstig herstellbar, wenn es als Membrandose ausgebildet ist. Eine relativ große Empfindlichkeit des Kompressionselements entsprechend einem großen Hub pro Druckänderung läßt sich dadurch erreichen, daß die Membrandose aus zwei Membranen, einer oberen Membran 22 und einer unteren Membran 23, gefertigt wird. Vorteilhaft ist es dabei, wenn die obere und die untere Membran identisch sind, da dann nur eine Membransorte hergestellt werden muß, was günstigen Einfluß auf die Herstellungs- und Montagekosten hat.

Um die Größe der Durchflußmenge bestimmen zu können, wird neben dem Wert der Druckdifferenz die relative Öffnungsstellung des Ventils, das heißt der Abstand zwischen dem Ventilsitz 7 und der Dichtfläche 10 des Schließkörpers 9, benötigt. Dieser Wert läßt sich in bekannter Weise dadurch gewinnen, daß mit dem Stellantrieb 3 ein Potentiometer verbunden ist. Das Potentiometer wird vom Stellantrieb 3 betätigt. Da der Stellantrieb 3 immer gleichzeitig die Spindel 8 und das Potentiometer betätigt, besteht ein direkter Zusammenhang zwischem der Stellung der Spindel 8 und dem abgreifbaren Widerstandswert des Potentiometers.

Da Stellantriebe oftmals in Räumen mit relativ hoher Feuchtigkeit betrieben werden, so etwa in Kellerräumen, kann die Gefahr bestehen, daß die widerstandsbestimmende Schicht des Potentiometers oberflächlich oxidiert, wodurch falsche Meßwerte für die Position der Spindel und damit für den Durchfluß hervorgerufen werden können. Um die Funktionssicherheit des Stellglieds zu erhöhen, ist es deshalb vorteilhaft, auf das die Position der Spindel messende Potentiometer zu verzichten und die Position der Spindel auf andere Art und Weise zu bestimmen.

Eine besonders vorteilhafte, weil gegen äußere Einflüsse unempfindliche Lösung besteht darin, als Stellantrieb 3 einen in seiner Laufrichtung umsteuerbaren Synchronmotor 25 (Fig. 2) zu verwenden und die Position der Spindel 8 dadurch zu erfassen, daß die Bewegungen des Synchronmotors 25 in Auf- und Zu-Richtung aufsummiert werden. Aus der Summation der Stellimpulse läßt sich, wie nachstehend noch erläutert wird, die Stellung der Spindel 8 gewinnen, so daß auf ein die Stellung der Spindel 8 erfassendes Potentiometer verzichtet werden kann.

Ein Synchronmotor zeichnet sich dadurch aus, daß bei ihm Proportionalität zwischen der Länge der Betriebsdauer und der Umdrehungszahl besteht. Wird von einem Synchronmotor ein lineares Stellglied betätigt, so ist dessen Position durch die Länge der Betriebsdauer des Synchronmotors bestimmt. Mit einem reversierbaren, d. h. in seiner Laufrichtung umsteuerbaren Synchronmotor ist es möglich, ein Stellglied in zwei Richtungen zu betätigen. Die Position des Stellgliedes ist somit durch die Summe der Betriebsdauer des Synchronmotors in Vorwärts- und Rückwärtsrichtung bestimmt, wenn bei der Summation die Rückwärtsrichtung mit negativem Vorzeichen eingeht. Bei einer Einrichtung mit einem reversierbaren Synchronmotor hebt sich die geringe Nichtproportionalität in der Anlaufphase des Synchronmotors weitgehend auf, wenn der Synchronmotor abwechselnd in beide Richtungen bewegt wird. Auf diese Weise ist es möglich, aus der Summation der Betriebsdauer in den beiden Bewegungsrichtungen ein Signal für die Stellung des vom Synchronmotor angetriebenen Organs zu gewinnen.

Zur Ansteuerung des Synchronmotors 25 ist deshalb ein Steuermodul 26 vorgesehen, das Befehle eines nicht dargestellten übergeordneten Reglers in bekannter Weise in zeitvariable Spannungspulse für den Synchronmotor 25 umsetzt. Der Synchronmotor 25 ist an Klemmen 27 und 28 des Steuermoduls 26 angeschlossen. Das Steuermodul 26 weist zwei weitere Ausgänge 29 und 30 auf, wobei am ersten Ausgang 29 ein Signal dann anliegt, wenn der Synchronmotor 25 Stellbefehle in der einen (z. B. Vorwärts-) Richtung erhält, und am zweiten Ausgang 30 ein Signal dann anliegt, wenn der Synchronmotor 25 Stellbefehle in der anderen (z. B. Rückwärts-) Richtung erhält. An die beiden Ausgänge 29 und 30 ist ein Summierglied 31 angeschlossen. Dieses Summierglied 31 addiert die zeitliche Dauer der Stellbefehle des Steuermoduls 26 an den Synchronmotor 25 in der Weise, daß Stellbefehle in der einen (z. B. Vorwärts-) Richtung mit positivem Vorzeichen und Stellbefehle in der anderen (z. B. Rückwärts-) Richtung mit negativem Vorzeichen summiert werden. Der an einem Ausgang 32 des Summierglieds 31 abgreifbare Inhalt des Summierglieds 31 entspricht damit der Position des vom Synchronmotor 25 angetriebenen Organs, also der Spindel 8. Der Inhalt des Summierglieds 31 ist somit ein Maß für den Öffnungsgrad des Ventils.

Die gleichen Vorteile lassen sich auch erreichen, wenn statt eines Synchronmotors ein Schrittmotor verwendet wird. In diesem Falle ist es zweckmäßig, als Summierglied 31 einen Zähler zu verwenden, dessen Zählerstand durch jeden Stellimpuls für den Schrittmotor verändert wird, indem jeder Impuls in Öffnungsrichtung den Zählerstand um den Betrag Eins erhöht und jeder Impuls in Schließrichtung um den Betrag Eins erniedrigt.

Um die Genauigkeit der Messung der Durchflußmenge weiter zu verbessern, ist es zweckmäßig, einen Temperaturfühler 24 (Fig. 1) in das Ventil, zum Beispiel in das Ventilgehäuse 2, einzubauen und dessen Signal bei der Berechnung der Durchflußmenge aus dem Öffnungsgrad des Stellglieds und der Druckdifferenz zu berücksichtigen. Dies ist besonders dann vorteilhaft, wenn das Medium, dessen Durchflußmenge zu messen ist, gasförmig ist. Wegen des starken Einflusses der Temperatur auf das Volumen eines Gases ist es zweckmäßig, die Temperatur zu messen. Damit ist es möglich, einerseits unter Vernachlässigung des Wertes der Temperatur das effektive Durchflußvolumen zu messen und daraus andererseits durch die Berücksichtigung der Temperatur ein der Stoffmenge proportionales Signal zu gewinnen, aus dem dann durch Messung und Berücksichtigung des absoluten Druckes direkt die Stoffmenge errechnet werden kann.

Die Integration eines Temperaturfühlers 24 in das Ventil ist auch dann vorteilhaft, wenn das Stellglied gleichzeitig zur Messung der Wärmemenge herangezogen werden soll. Ein Wärmemengenzähler läßt sich besonders vorteilhaft gestalten, wenn für die Messung der Durchflußmenge das hier beschriebene Stellglied mit integriertem Temperaturfühler verwendet wird. Ist das Stellglied in der Rücklaufleitung einer Heizungsanlage eingebaut, so ist lediglich noch ein Temperaturfühler in der Vorlaufleitung und ein Differenzier-, ein Multiplizier- und ein Integrationsglied erforderlich, um einen Wärmemengenzähler großer Genauigkeit zu erhalten. Dabei ist es vorteilhaft, daß das Stellglied gleichzeitig zur Regelung der mit der Durchflußmenge verknüpften Wärmemenge und zur Messung der Wärmemenge herangezogen werden kann. Ein System zur Regelung der Wärmemenge, das zum Beispiel erforderlich ist, um die in einem Fernheiznetz verfügbare Gesamtwärmemenge auf die angeschlossenen Verbraucher gerecht zu verteilen, läßt sich auf sehr einfache Weise dadurch realisieren, daß der auf der Basis des beschrieben Stellglieds geschaffene Wärmemengenzähler zusätzlich noch mit einem Speicher ausgerüstet wird, in dem die maximal beziehbare Wärmeleistung gespeichert wird. Außerdem ist ein Vergleicher erforderlich, der die im Speicher abgelegte maximal beziehbare Wärmeleistung vergleicht mit der momentan bezogenen Wärmeleistung. Die momentan bezogene Wärmeleistung ist innerhalb des Wärmemengenzählers charakterisiert durch das aus der Multiplikation von Durchflußmenge und Temperaturdifferenz sich ergebende, noch nicht integrierte Signal. Auf einfache Weise läßt sich beim Überschreiten der Wärmeleistung ein Rückgriff auf das Stellglied erreichen, indem beim Überschreiten der vorgegebenen Wärmeleistung der Öffnungsgrad des Stellglieds verkleinert wird.

Üblicherweise wird danach gestrebt, den Differenzdruck möglichst konstant zu halten, um Fehler bei der Erfassung der Durchflußmenge als Funktion des Öffnungsgrades klein zu halten. Die in das Stellglied 1 integrierte Meßeinrichtung für den Differenzdruck erlaubt es jedoch, diese Einschränkung zu überwinden und den Differenzdruck je nach Betriebssituation der Gesamtanlage zu variieren, ohne daß darunter die Genauigkeit der Durchflußmengenerfassung leidet. Auch bei geschlossenem Stellglied 1 gibt die Differenzdruck-Meßeinrichtung ein Signal ab, welches dem Differenzdruck über dem Stellglied 1 entspricht. Es ist damit möglich, bei geschlossenem Stellglied 1, wenn also die Durchflußmenge Null ist, die Umwälzpumpe abzuschalten. Ebenso ist es möglich, bei beinahe ganz geschlossenem Stellglied 1, wenn dadurch der Differenzdruck stark ansteigt, die Drehzahl der Umwälzpumpe zu reduzieren. Dies hat den Vorteil, daß der Energieaufwand für das Betreiben der Umwälzpumpe minimiert werden kann.

**Patentansprüche**

1. Stellglied zur Beeinflussung der Durchflußmenge eines gasförmigen oder flüssigen Mediums in einer Rohrleitung, mit einem in einem Ventilgehäuse (2) zwischen einer Einlaßkammer (4) und einer Auslaßkammer (5) angeordneten Ventilsitz (7), mit einem Stellantrieb (3), mit einem zum Öffnen in Strömungsrichtung gegenüber dem Ventilsitz (7) verstellbaren und durch eine Spindel (8) mit dem Stellantrieb (3) verbundenen Schließkörper (9), mit Mitteln zur Erfassung der relativen Öffnungsstellung und mit einem ein elektrisches Signal abgebenden Differenzdruckmesser (18, 20), der den Differenzdruck zwischen der Einlaßkammer (4) und der Auslaßkammer (5) mittels eines Druckmeßelements (14) erfaßt,
**dadurch gekennzeichnet,**
daß das Druckmeßelement (14) im Schließkörper (9) eingebaut ist.

2. Stellglied nach Anspruch 1,
**dadurch gekennzeichnet,**
daß als Druckmeßelement (14) ein piezoresistiver wandler verwendet ist.

3. Stellglied nach Anspruch 1, dadurch gekennzeichnet, daß das Druckmeßelement (14) aus einem unter der Wirkung des Differenzdrucks zwischen der Einlaßkammer (4) und der Auslaßkammer (5) seine Höhe H ändernden Kompressionselement (22, 23) und einer Vorrichtung (18, 20) zur Messung der Gestaltänderung des Kompressionselements (22, 23) besteht.

4. Stellglied nach Anspruch 3, dadurch gekennzeichnet, daß das Kompressionselement (22, 23) mit einer Basisfläche (15) am Schließkörper (9) befestigt ist und daß an einer der Basisfläche (15) gegenüberliegenden Bezugsfläche (17) eine Stange (19) befestigt ist, die mit der Vorrichtung (18, 20) zur Messung der Gestaltänderung des Kompressionselements (22, 23) verbunden ist.

5. Stellglied nach Anspruch 4, dadurch gekennzeichnet, daß das Kompressionselement (22, 23) eine Membrandose ist.

6. Stellglied nach Anspruch 5, dadurch gekennzeichnet, daß das Kompressionselement (22, 23) aus einer ersten oberen, mit der Stange (19) formschlüssig verbundenen Membran (22) und einer zweiten unteren, mit dem Schließkörper (9) formschlüssig verbundenen Membran (23) besteht.

7. Stellglied nach einem der Ansprüche 4 bis 6, dadurch gekennzeichnet, daß die Vorrichtung (18, 20) zur Messung der Gestaltänderung ein Hallsonden-Magnetsystem ist.

8. Stellglied nach Anspruch 7, dadurch gekennzeichnet, daß die Vorrichtung (18, 20) zur Messung der Gestaltänderung aus einem im Inneren der Spindel (8) an der Stange (19) befestigten Magneten (18) und einer außerhalb der Spindel (8) angebrachten, an der Mantelfläche der Spindel (8) befestigten Hallsonde (20) besteht.

9. Stellglied nach einem der Ansprüche 1 bis 8, dadurch gekennzeichnet, daß in an sich bekannter Weise mit dem Stellantrieb (3) ein die Position der Spindel (8) erfassendes Potentiometer verbunden ist.

10. Stellglied nach einem der Ansprüche 1 bis 8, dadurch gekennzeichnet, daß der Stellantrieb (3) einen Synchronmotor (25) enthält, der von einem Steuermodul (26) mit einem zugeordneten Summierglied (31) dadurch betätigt wird, daß das Steuermodul (26) Steuersignale für den Synchronmotor (25) abgibt, die den Synchronmotor (25) in Öffnungs- oder in Schließrichtung laufen lassen, daß die Steuersignale in Öffnungsrichtung zum Speicherwert des Summiergliedes (31) addiert und die Steuersignale in Schließrichtung vom Speicherwert des Summiergliedes (31) subtrahiert werden, so daß der Speicherwert den Öffnungsgrad des Ventils repräsentiert.

11. Stellglied nach einem der Ansprüche 3 bis 10, dadurch gekennzeichnet, daß in das Ventil ein Temperaturfühler (24) eingebaut ist.

12. Verwendung des Stellgliedes nach Anspruch 11 in einem Wärmemengenzähler.

13. Verwendung des Stellgliedes nach Anspruch 11 in einem System zur Regelung der Wärmemenge.

**Claims**

1. A control member for influencing the quantitative flow rate of a gaseous or liquid medium in a conduit, comprising a valve seat (7) disposed in a valve housing (2) between an inlet chamber (4) and an outlet chamber (5), a control drive (3), a closing member (9) which is displaceable relative to the valve seat (7) in a flow direction for opening purposes and which is connected by a spindle (8) to the control drive (3), means for detecting the relative opening position and a differential pressure measuring means (18, 20) which outputs an electrical signal and which detects the differential pressure between the inlet chamber (4) and the outlet chamber (5) by means of a pressure measuring element (14), characterised in that the pressure measuring element (14) is installed in the closing member (9).

2. A control member according to claim 1 characterised in that a piezoresistive transducer is used as the pressure measuring element (14).

3. A control member according to claim 1 characterised in that the pressure measuring element (14) comprises a compression element (22, 23) which varies its height H under the action of the differential pressure between the inlet chamber (4) and the outlet chamber (5), and a means (18, 20) for measuring the change in configuration of the compression element (22, 23).

4. A control member according to claim 3 characterised in that the compression element (22, 23) is fixed with its base surface (15) to the closing member (9) and that fixed to a reference surface (17) which is in opposite relationship to the base surface (15) is a bar (19) which is connected to the means (18, 20) for measuring the change in configuration of the compression element (22, 23).

5. A control member according to claim 4 characterised in that the compression element (22, 23) is a diaphragm-type cell.

6. A control member according to claim 5 characterised in that the compression element (22, 23) comprises a first upper diaphragm (22) which is positively connected to the bar (19) and a second lower diaphragm (23) which is positively connected to the closing member (9).

7. A control member according to one of claims 4 to 6 characterised in that the means (18, 20) for measuring the change in configuration of the compression element is a Hall probe magnet system.

8. A control member according to claim 7 characterised in that the means (18, 20) for measuring the change in configuration of the compression element comprises a magnet (18) which is fixed to the bar (19) in the interior of the spindle (8), and a Hall probe (20) which is disposed outside the spindle (8) and which is fixed to the peripheral surface of the spindle (8).

9. A control member according to one of claims 1 to 8 characterised in that a potentiometer for detecting the position of the spindle (8) is connected to the control drive (3) in per se known manner.

10. A control member according to one of claims 1 to 8 characterised in that the control drive (3) includes a synchronous motor (25) which is actuated by a control module (26) with an associated summing member (31), in that the control module (26) outputs control signals for the synchronous motor (25), which cause the synchronous motor (25) to operate in the opening or in the closing direction, that the control signals in the opening direction are added to the storage value of the summing member (31) and the control signals in the closing direction are subtracted from the storage value of the summing member (31) so that the storage value represents the degree of opening of the valve.

11. A control member according to one of claims 3 to 10 characterised in that a temperature sensor (24) is incorporated into the valve.

12. Use of the control member according to claim 11 in a calorimeter.

13. Use of the control member according to claim 11 in a system for regulating the quantity of heat.

## Revendications

1. Organe de réglage pour influencer le débit d'un milieu gazeux ou liquide dans une tuyauterie, comportant un siège de soupape (7), disposé dans un corps de soupape (2), entre une chambre d'entrée (4) et une chambre de sortie (5), un servo-entraînement (3), un corps d'obturation (9), réglable par rapport au siège de soupape (7) en vue d'assurer l'ouverture dans la direction de l'écoulement et relié au servo-entraînement (3) à l'aide d'une broche (8), des moyens de mesure de la position d'ouverture relative et un capteur de pression différentielle (18,20) envoyant un signal électrique et mesurant à l'aide d'un élément de mesure de pression (14) la différence de pression, entre la chambre d'entrée (4) et la chambre de sortie (5), caractérisé en ce que l'élément de mesure de pression (14) est intégré dans le corps d'obturation (9).

2. Organe de réglage selon la revendication 1, caractérisé en ce qu'on utilise comme élément de mesure de pression (14) un convertisseur piézo-électrique.

3. Organe de réglage selon la revendication 1, caractérisé en ce que l'élément de mesure de pression (14) est composé d'un élément de compression (22,23), dont la hauteur H varie sous l'effet de la pression différentielle entre la chambre d'entrée (4) et la chambre de sortie (5), et d'un dispositif (18,20) destiné à mesurer la variation de forme de l'élément de compression (22,23).

4. Organe de réglage selon la revendication 3, caractérisé en ce que l'élément de compression (22,23) est fixé, par une surface de base (15), sur le corps d'obturation (9) et en ce que, sur une surface de référence (17) opposée à la surface de base (15) est fixée une tige (19) reliée au dispositif (18,20) destiné à mesurer la variation de forme de l'élément de compression (22,23).

5. Organe de réglage selon la revendication 4, caractérisé en ce que l'élément de compression (2,23) est une membrane.

6. Organe de réglage selon la revendication 5, caractérisé en ce que l'élément de compression (2,23) est composé d'une première membrane supérieure (22), reliée à la tige (19) par ajustement de forme, et d'une seconde membrane inférieure (23), reliée par ajustement de forme au corps d'obturation (9).

7. Organe de réglage selon l'une des revendications 4 à 6, caractérisé en ce que le dispositif (18,20) destiné à mesurer la variation de forme est un système magnétique à sonde à effet Hall.

8. Organe de réglage selon la revendication 7, caractérisé en ce que le dispositif (18,20) destiné à mesurer la variation de forme est composé d'un aimant (18), fixé à l'intérieur de la broche (8), sur la tige (19), et d'une sonde à effet Hall (20), fixée à l'extérieur de la broche (8), sur la génératrice de cette dernière.

9. Organe de réglage selon l'une des revendications 1 à 8, caractérisé en ce qu'un potentiomètre mesurant la position de la broche (8) est relié, de manière connue, au servo-entraînement.

10. Organe de réglage selon l'une des revendications 1 à 8, caractérisé en ce que le servo-entraînement (3) contient un moteur synchrone (25), actionne par un module de commande (26) comportant un organe sommateur (31) associé, par le fait que le module de commande (26) envoie des signaux de commande pour le moteur synchrone (25), qui font tourner le moteur synchrone (25) dans la direction de l'ouverture ou de la fermeture, en ce que les signaux de commande destinés à produire l'ouverture sont additionnés à la valeur de mémoire de l'organe sommateur (31) et les signaux de commande destinés à produire la fermeture sont soustraits de la valeur de mémoire de l'organe sommateur (31), de telle façon que la valeur de mémoire représente le degré d'ouverture de la soupape.

11. Organe de réglage selon l'une des revendications 3 à 10, caractérisé en ce qu'une sonde de température (24) est intégrée dans la soupape.

12. Utilisation de l'organe de réglage selon la revendication 11, dans un compteur de quantité de chaleur.

13. Utilisation de l'organe de réglage selon la revendication 11, dans un système de régulation de la quantité de chaleur.

# Fig. 1

# Fig. 2